(19) Europäisches Patentamt
European Patent Office
Office européen des brevets

(11) Veröffentlichungsnummer: **0 076 410**
**B1**

(12) **EUROPÄISCHE PATENTSCHRIFT**

(45) Veröffentlichungstag der Patentschrift: **08.04.87**

(51) Int. Cl.⁴: **C 09 B 62/004,** D 06 P 3/10, D 06 P 3/66

(21) Anmeldenummer: **82108616.2**

(22) Anmeldetag: **18.09.82**

(54) **Anthrachinon-Reaktivfarbstoffe.**

(30) Priorität: **02.10.81 DE 3139315**

(43) Veröffentlichungstag der Anmeldung: **13.04.83 Patentblatt 83/15**

(45) Bekanntmachung des Hinweises auf die Patenterteilung: **08.04.87 Patentblatt 87/15**

(84) Benannte Vertragsstaaten: **CH DE FR GB LI**

(56) Entgegenhaltungen:
**FR-A-1 205 622**
**FR-A-1 563 661**
**FR-A-2 316 294**
**GB-A-1 181 744**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Schallner, Otto, Dr., Jakob- Böhme-Strasse 11, D-5000 Köln 80 (DE)**

EP 0 076 410 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft neue Reaktivfarbstoffe der allgemeinen Formel

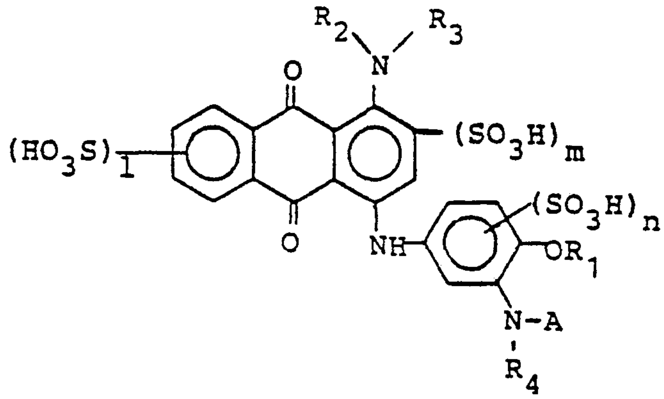

(I)

worin
$R_1$ = Alkyl, Cycloalkyl, Aryl oder Aralkyl,
$R_2$ bis $R_4$ = Wasserstoff oder $R_1$,
l, m und n gleich oder verschieden sind und für 0 oder 1 stehen, wobei $1 + m + n \geqslant 1$ und
A = faserreaktiver Rest.

Für Formel (I) gilt:

Unter Alkyl ist dabei insbesondere Alkyl mit 1 bis 4 C-Atomen zu verstehen, das gegebenenfalls Substituenten aufweisen kann, z.B. Halogen wie Cl und Br, Alkoxy-, -OH, $-NH_2$, Alkylamino, Dialkylamino, -CN, $-SO_3H$, -COOH. Unter Aryl ist insbesondere Phenyl zu verstehen, welches gegebenenfalls Substituenten aufweist wie Cl, Br, $C_1$-$C_4$-Alkyl, $C_1$-$C_4$-Alkoxy, $C_1$-$C_4$-Alkylsulfonyl, $NO_2$, CN, $CF_3$, $SO_3H$, COOH.

Unter Aralkyl wird insbesondere Benzyl verstanden, das gegebenenfalls die für Phenyl vorstehend genannten Substituenten aufweisen kann.

Unter Cycloalkyl ist insbesondere Cycloalkyl mit 3 bis 7 C-Atomen zu verstehen.

Bevorzugte Reste $R_2$ bis $R_4$ sind Wasserstoff und gegebenenfalls durch Halogen, $C_1$-$C_4$-Alkoxy, $SO_3H$ oder COOH substituiertes $C_1$-$C_4$-Alkyl oder Phenyl.

Bevorzugte Reste $R_1$ sind gegebenenfalls durch Halogen, $C_1$-$C_4$-Alkoxy, $SO_3H$ oder COOH substituiertes $C_1$-$C_4$-Alkyl oder Phenyl.

A steht vorzugsweise für den faserreaktiven Rest einer aliphatischen, aromatischen oder heteroaromatischen Carbonsäure oder eines fluorhaltigen Heterocyclus.

Besonders bevorzugt sind Reaktivfarbstoffe der Formel (I), wobei A, $R_1$ bis $R_4$ sowie l, m und n die folgenden Bedeutungen haben:

A = Faserreaktiver Rest einer aliphatischen, aromatischen oder hereroaromatischen Carbonsäure oder eines fluorhaltigen Hererocyclus,
$R_1$ = $C_1$-$C_4$-Alkyl, gegebenenfalls durch $SO_3H$, Halogen, oder COOH substituiertes Phenyl oder Benzyl,
$R_2$-$R_4$ = Wasserstoff oder $C_1$-$C_4$-Alkyl,
l = 0,1
m = 1
n = 0,1.

Weiterhin bevorzugt sind Reaktivfarbstoffe der Formel (I), worin A für einen Halogenpropionylrest, einen Fluorpyrimidinylrest, einen Fluortriazinylrest für den Dichlorchinoxalincarbonsäurechlorid-Rest oder einen Acrylsäurerest steht.

Insbesondere bevorzugt sind Farbstoffe der Formel

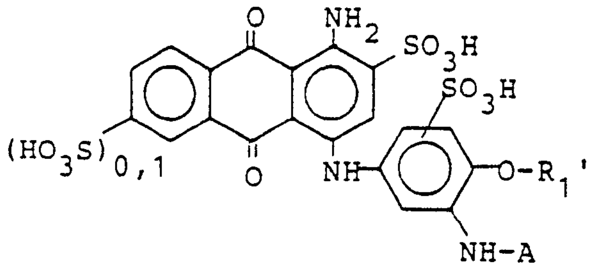

(Ia)

worin
$R'_1$ = $C_1$-$C_4$-Alkyl oder gegebenenfalls durch $SO_3H$ substituiertes Phenyl und wobei
A = die oben angegebene Bedeutung besitzt.

Die Herstellung der neuen Farbstoffe (I) kann nach verschiedenen Verfahren erfolgen, beispielsweise durch Umsetzung eines Farbstoffvorproduktes der Formel (II)

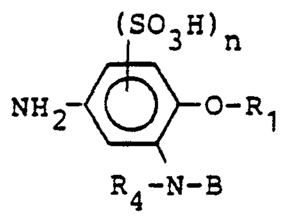

(II)

worin
B = H, A oder nicht-faserreaktiver Rest einer Carbonsäure und wobei
$R_1$ und $R_4$ die oben angegebene Bedeutung haben,
mit einem Anthrachinonderivat der Formel (III)

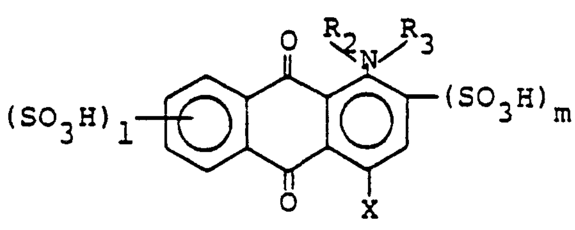

(III)

worin
X = Cl oder Br und wobei
$R_2$, $R_3$, l und m die oben angegebene Bedeutung haben,
nach bekannten Methoden zum Farbstoff der Formel (IV)

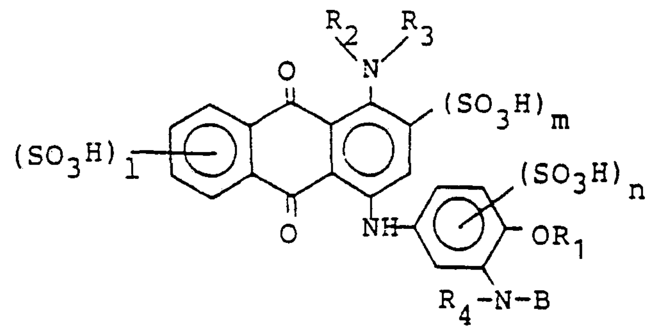

(IV)

worin
$R_1$-$R_4$, B, l und m die oben angegebene Bedeutung haben,
und, falls B = nicht-faserreaktiver Rest (z.B. Acylrest) einer Carbonsäure, dieser hydrolytisch abgespalten wird und der entstehende Farbstoff der Formel (IV) mit B = Wasserstoff mit einer Reaktivkomponente der Formel (V)
A-Y (V)
worin
Y abspaltbarer Rest (insbesondere Halogen) und
A die oben angegebene Bedeutung hat,
zum Farbstoff der Formel (I) umgesetzt wird.

An den Farbstoffen der Formel (I) und (IV) können weitere Umsetzungen durchgeführt werden, vorzugsweise Sulfierungen.

Geeignete Verbindungen der Formel (V) sind beispielsweise:
2,4-Difluorpyrimidin, 2,4-Difluor-6-methylpyrimidin, 2,6-Difluor-4-methyl-5-chlorpyrimidin, 2,4,6-Trifluorpyrimidin, 2,4-Difluorpyrimidin-5-ethylsulfon, 2,6-Difluor-4-chlorpyrimidin, 2,4,5,6-Tetrafluorpyrimidin, 2,4,6-Trifluor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäuremethyl- oder -ethylester oder -5-carbonsäureamid, 2,6-Difluor-5-methyl-4-chlorpyrimidin, 2,6-Difluor-5-chlorpyrimidin, 2,4,6-Trifluor-5-methylpyrimidin, 2,4,5-Trifluor-6-methylpyrimidin, 2,4-Difluor-5-nitro-6-chlorpyrimidin, 2,4-Difluor-5-cyanpyrimidin, 2,4-Difluor-5-methyl-pyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 5-Trifluormethyl-2,4-difluorpyrimidin, 2,4-Difluor-5-nitropyrimidin, 2,4-Difluor-5-trifluormethyl-pyrimidin, 2,4-Difluor-5-methylsulfonyl-pyrimidin, 2,4-Difluor-5-phenylpyrimidin, 2,4-Difluor-5-carbonamido-pyrimidin, 2,4-Difluor-5-carbomethoxypyrimidin, 2,4-Difluor-6-trifluormethylpyrimidin, 2,4-Difluor-5-brom-6-trifluor-methylpyrimidin, 2,4-Difluor-6-carbonamido-pyrimidin, 2,4-Difluor-6-carbomethoxy-pyrimidin, 2,4-Difluor-6-phenylpyrimidin, 2,4-Difluor-6-cyanpyrimidin, 2,4,6-Trifluor-5-methylsulfonyl-pyrimidin, 2,4-Difluor-5-chlor-6-carbomethoxy-pyrimidin, 2,4-Difluor-5-sulfon-amido-pyrimidin, 5-Brom-6-dichlormethyl-, 5-Chlor-6-dichlormethyl-, 5-Chlor-6-dichlorfluormethyl-, 5-Chlor-6-chlormethyl-, 5-Chlor-6-brommethyl-, 5-Brom-6-brommethyl-, 5-Brom-6-dichlorfluormethyl-, 6-Dichlorfluormethyl-, 5-Chlor-6-trichlormethyl- oder 5-Brom-6-trichlor-methyl-2,4-difluorpyrimidin, Cyanurfluorid, 2-Amino-, -2-Hydrazino-, 2-Alkyl- und Arylamino-, 2-Hydroxy-, 2-Alkoxy- und Phenoxy-, 2-Mercapto-, 2-Alkylthio- und 2-Arylthio-4,6-difluortriazine, deren Alkyl und Arylsubstituenten weitere Gruppen wie OH, $NH_2$, N-Alkyl, $SO_3H$ oder COOH tragen können, Brom- oder Chloressigsäurechlorid, 2,4,5-Trichlorpyrimidin-6-carbonsäurechlorid, 2,4,6-Trichlorpyrimidin-5-carbonsäurechlorid, 2,3-Dichlorchinoxalin-6-carbonsäurechlorid, Acrylsäurechlorid, 2-Chlor- oder 2-Brom-acrylsäurechlorid oder -bromid, 2,3-Dichloracrylsäurechlorid, 2,3-Dibromacrylsäurechlorid oder -bromid, 2,3-Dibrompropionsäurechlorid oder -bromid, 3-Chloracrylsäurechlorid, 2-Chlor-3-methylacrylsäurechlorid, Trichloracrylsäurechlorid, 3-Sulfato-propionsäurechlorid, 3-Brom-acrylsäurechlorid, Tribromacrylsäurechlorid, 3,3-Dichloracrylsäurechlorid, 3-Chlor-3-bromacrylsäurechlorid, 3,3-Dibromacrylsäurechlorid, Crotonoylchlorid, 2-Chlorcrotonoylchlorid, 2-Bromcrotonoylchlorid, 2-Bromcrotonoylchlorid, 2,3-Dichlorpropionsäurechlorid, 3-Chlorpropionsäurechlorid oder -bromid, 3,3-Dichlorpropionsäurechlorid, 3-Brompropionsäurechlorid, 3-Chlor-2-brompropionsäurechlorid, 2-Fluor-2-chlor-3,3-difluorcyclobutan-1-carbonsäurechlorid, β-[2,2,3,3-Tetrafluorcyclobutyl]-acrylsäure-chlorid, 2-Chlor-, 2-Brom-, 3-Chlor-, 3-Brom-3-alkyl-, -aryl- und -hetarylsulfonylpropionylchloride insbesondere 2-Brom-3-phenylsulfonylpropionylchlorid, 3-Brom-3-phenylsulfonylpropionylchlorid, 3-Chlor-3-phenylsulfonylpropionylchlorid, 2-Chlor-3-phenylsulfonylpropionylchlorid, 2,2-Dichlor-3-phenylsulfonylpropionylchlorid.

Die Umsetzung der Verbindungen der Formel (IV) (wobei B = H) mit den Reaktivkomponenten der Formel

(V) wird in wäßrigem, organisch-wäßrigem oder organischem Medium (abhängig von der Art der Ausgangsverbindungen) bei Temperaturen von -10 bis ca. +50°C und bei pH-Werten von 4-10, vorzugsweise 5,0-8,0, in Gegenwart alkalischer Kondensationsmittel, wie Alkali- oder Erdalkalicarbonat bzw. -oxid durchgeführt.

Die Verbindungen der Formel (IV), in welcher n = 1 und B = Wasserstoff, werden vorzugsweise durch Sulfonierung von Verbindungen der Formel

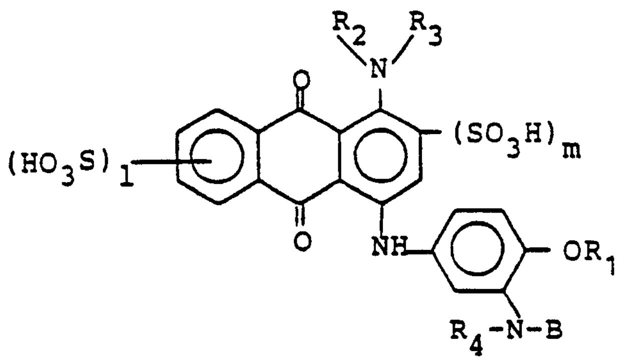

(VI)

wobei

l, m, $R_1$, $R_2$, $R_3$ und $R_4$ die oben angegebene Bedeutung haben, und

B für einen Acylrest, insbesondere für Acetyl, steht,

mit einem Gemisch aus conc. Schwefelsäure und Oleum bei niederen Temperaturen, anschließende Suspension des Niederschlags und Hydrolyse mit verdünnten Säuren bei Temperaturen von 40 bis 100°C, insbesondere von 60 bis 90°C, hergestellt.

Die neuen Farbstoffe sind äußerst wertvolle Produkte, die sich für verschiedenste Anwendungszwecke eignen. Sie finden bevorzugtes Interesse für das Färben hydroxylgruppenhaltiger und stickstoffhaltiger Materialien, insbesondere von Textilmaterialien aus nativer und regenerierter Cellulose, aus Wolle, ferner aus Seide, synthetischen Polyamid- und Polyurethanfasern sowie zum Färben von Papier.

**Beispiel 1**

In eine Mischung aus 130 ml Schwefelsäure (98 %ig) und 530 ml Oleum (20 %ig an $SO_3$) werden 240 g 1-Amino-4-(3'-acetylamino-4'-methoxy-phenylamino)-anthrachinon-2-sulfonsäure innerhalb von 2 Stunden bei 10°C eingetragen. Man läßt die Temperatur auf ca. 20°C ansteigen, rührt 12 Stunden nach und trägt auf 4000 g Eis und 500 ml Wasser aus. Der Niederschlag wird abgesaugt, in 1600 ml Wasser suspendiert und auf 80°C erwärmt. Bei dieser Temperatur gibt man 250 ml Salzsäure (30 %ig) zu und hält diese Temperatur eine Stunde.

Danach kühlt man auf 50°C ab und saugt die ausgefallene 1-Amino-4-(3'-amino-4'-methoxy-x'-sulfo-phenylamino)-anthrachinon-2-sulfonsäure ab.

Zur weiteren Umsetzung wird sie in 2300 ml Wasser bei pH 6,5 gelöst, auf 10°C abgekühlt und mit einer 0°C bis 5°C kalten Suspension aus 135 g 3-Chlor-3-phenylsul-fonylpropionylchlorid in 300 ml Wasser versetzt. Mit Sodalösung wird ein pH-Wert von 6,5 gehalten. Der Endpunkt der Acylierung wird chromatographisch bestimmt.

Der Farbstoff der Formel

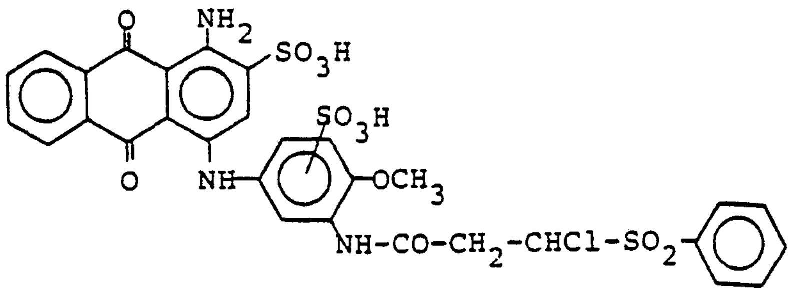

wird ausgesalzen, isoliert und getrocknet. Ausbeute: 300 g.

Er färbt Wolle und Baumwolle in echten grünstichig blauen Tönen und zeichnet sich durch eine sehr gute Kombinierbarkeit aus.

Der λ max.-Wert beträgt 605 nm. Farbtonangabe nach Colour Index Hue Indication Chart: Grünstichiges Blau 15 (Bright).

Weitere grünstichig blaue bis blaue Reaktivfarbstoffe mit ähnlichen Eigenschaften erhält man, wenn man anstelle von 3-Chlor-3-phenylsulfonyl-propionylchlorid bzw. 1-Amino-4-(3'-amino-4'-methoxy-x'-sulfophenylamino)-anthrachinon-2-sulfonsäure, die in der folgenden Tabelle aufgeführten Reaktivkomponenten bzw. Anthrachinonderivate verwendet.

Nach dem Farbton ist in der folgenden Tabelle die jeweilige Nummer nach Colour-Index Hue Indication Chart angegeben.

| Beispiel | Anthrachinonderivat | Reaktivkomponente | Farbton | CI. Nr. | |
|---|---|---|---|---|---|
| 2 | 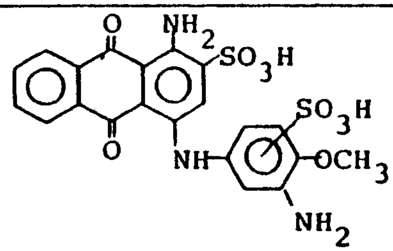 | 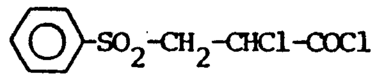 | grünst. Blau | 15 | bright |
| 3 | " | 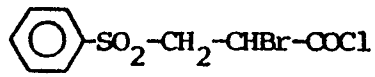 | " | " | " |
| 4 | " | 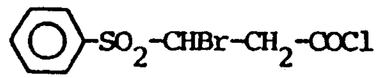 | " | " | " |
| 5 | " | $BrCH_2-CHBr-COCl$ | " | " | " |
| 6 | " | $CH_2=CBr-COCl$ | " | " | " |
| 7 | " | 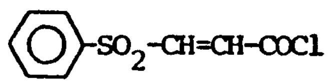 | " | " | " |
| 8 | " | $Cl-CH_2-COCl$ | " | " | " |
| 9 | " | 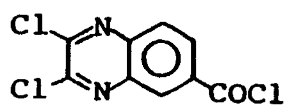 | " | " | " |
| 10 | " | 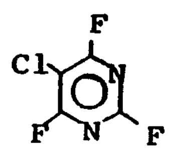 | " | " | " |

| Beispiel | Anthrachinonderivat | Reaktivkomponente | Farbton | CI. Nr. | |
|---|---|---|---|---|---|
| 11 | " | 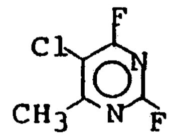 | grünst.Blau | 15 | bright |
| 12 | " | 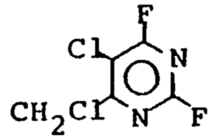 | " | " | " |
| 13 | 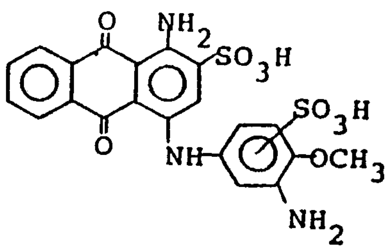 | 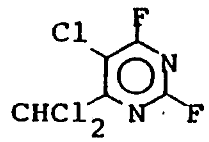 | " | " | " |
| 14 | " | 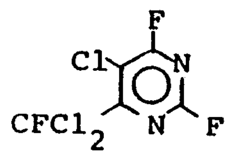 | " | " | " |
| 15 | " | 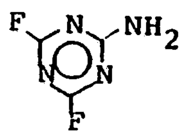 | " | " | " |
| 16 | " | 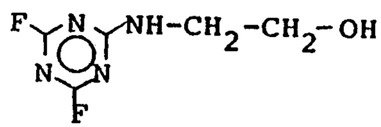 | " | | |

| Beispiel | Anthrachinonderivat | Reaktivkomponente | Farbton | CI. Nr. | |
|---|---|---|---|---|---|
| 17 | " | 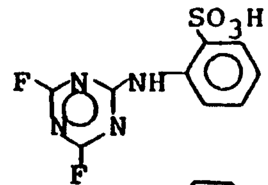 | grünst.Blau | 15 | bright |
| 18 | " | 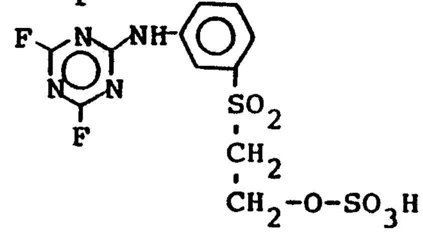 | " | " | " |
| 19 | " | 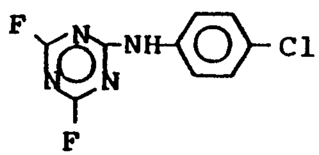 | " | " | " |
| 20 | 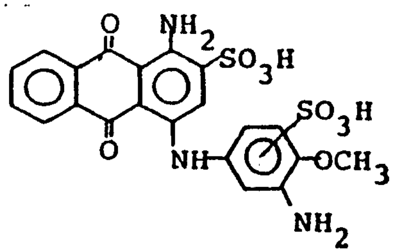 | 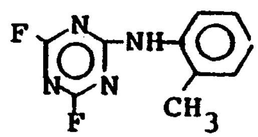 | " | 15 | " |
| 21 | " | 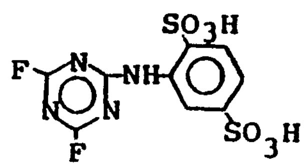 | " | 15 | " |

| Bei-spiel | Anthrachinonderivat | Reaktivkomponente | Farbton | CI. Nr. | |
|---|---|---|---|---|---|
| 22 | 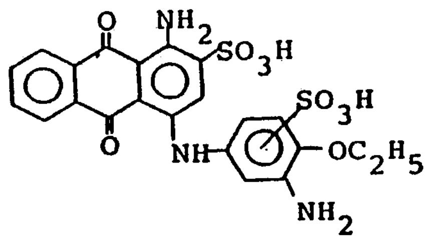 | 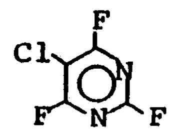 | grünst.Blau | 15 | bright |
| 23 | " | Br-$CH_2$-CHBr-COCl | " | 15 | bright |
| 24 | " | 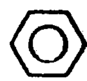-$SO_2$-CHCl-$CH_2$-COCl | " | 15 | " |
| 25 | " | 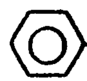-$SO_2$-$CH_2$-CHCl-COCl | " | 15 | " |
| 26 | " | 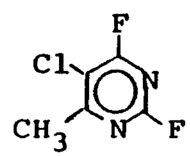 | " | 15 | " |
| 27 | " | 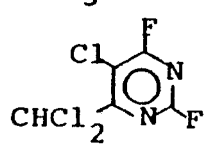 | " | 15 | " |

| Beispiel | Anthrachinonderivat | Reaktivkomponente | Farbton | CI. Nr. | |
|---|---|---|---|---|---|
| 28 | 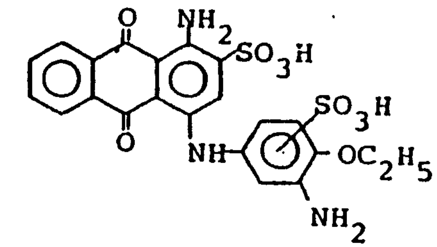 | 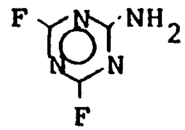 | grünst.Blau | 15 | bright |
| 29 | 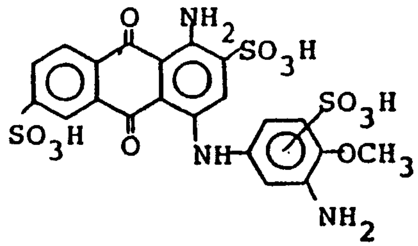 | " | " | " | " |
| 30 | " | $BrCH_2-CHBr-COCl$ | " | " | " |
| 31 | " | 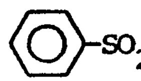 $-SO_2-CH_2-CHCl-COCl$ | " | " | " |
| 32 | " | 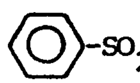 $-SO_2-CHCl-CH_2-COCl$ | " | " | " |
| 33 | " | 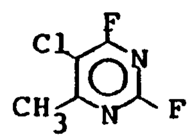 | " | " | " |
| 34 | " | 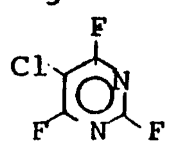 | " | .. | .. |

**Beispiel 35**

82 g 1-Amino-4-(4'-methoxy-3'-amino-phenylamino)-anthra-chinon-2-sulfonsäure werden in 2000 ml Wasser neutral suspendiert und bei 5-10°C mit einer Suspension von 57 g 3-Chlor-3-phenylsulfonylpropionylchlorid in Eiswasser versetzt. Durch Zugabe von Sodalösung wird ein pH-Wert von 6,5-7 eingehalten. Gegen Ende der Reaktion wird auf 30 bis 40°C erwärmt. Der Endpunkt der Acylierung wird chromatographisch bestimmt.

Nach beendeter Reaktion wird der Farbstoff der Formel

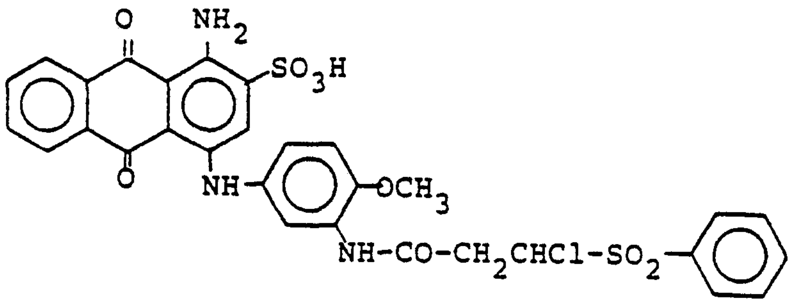

isoliert und getrocknet. Ausbeute: 110 g.

Er färbt Wolle in echten grünstichig blauen Tönen und zeichnet sich durch eine sehr gute Kombinierbarkeit aus. CI Nr. 39, dull.

Weitere Farbstoffe mit ähnlichen Eigenschaften sind in der nächsten Tabelle aufgeführt. Ihre Darstellung gelingt nach dem oben beschriebenen Verfahren.

| Bei-spiel | Anthrachinonderivat | Reaktivkomponente | Farbton | CI. Nr. | |
|---|---|---|---|---|---|
| 36 | 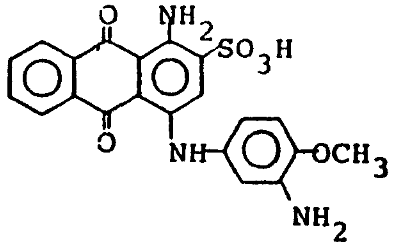 | 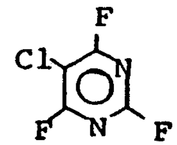 | blaust.Grün | 40 | Dull |
| 37 | " | 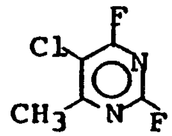 | " | " | " |
| 38 | " | 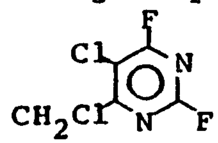 | " | " | " |
| 39 | " | 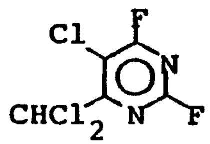 | " | " | " |
| 40 | " | 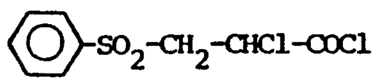 | grünst.Blau | 39 | " |
| 41 | " | 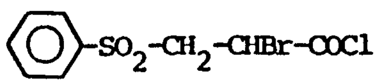 | " | 39 | " |
| 42 | " | 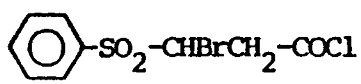 | " | 39 | " |

| Bei-spiel | Anthrachinonderivat | Reaktivkomponente | Farbton | CI. Nr. | |
|---|---|---|---|---|---|
| 43 | " | $BrCH_2-CHBr-COCl$ | grünst.Blau | 39 | Dull |
| 44 | " | $CH_2=CBr-COCl$ | " | 39 | " |
| 45 | " | 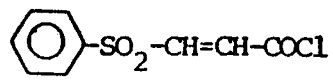 | " | 39 | " |
| 46 | 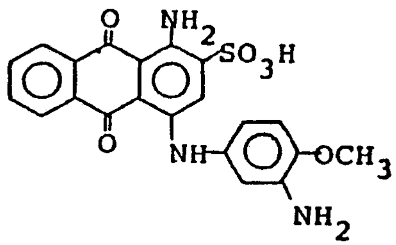 | $Cl-CH_2-COCl$ | " | 39 | " |
| 47 | " | 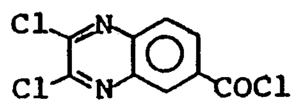 | " | 39 | " |
| 48 | " | 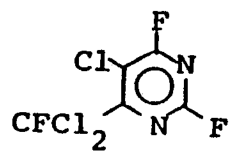 | " | 39 | " |
| 49 | " | 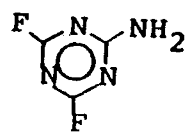 | blaust.Grün | 40 | " |

| Beispiel | Anthrachinonderivat | Reaktivkomponente | Farbton | CI. Nr. | |
|---|---|---|---|---|---|
| 50 | " | 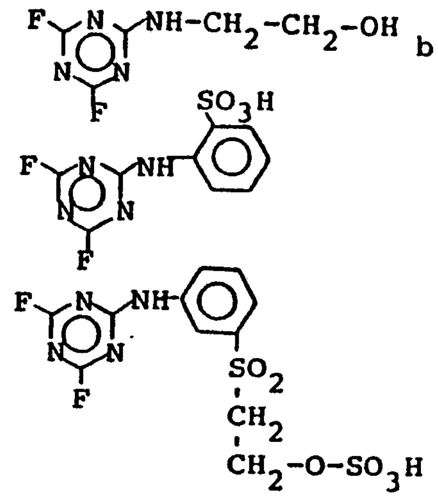 | blaust. Grün | 40 | Dull |
| 51 | " | | " | 40 | " |
| 52 | " | | " | 40 | " |
| 53 | 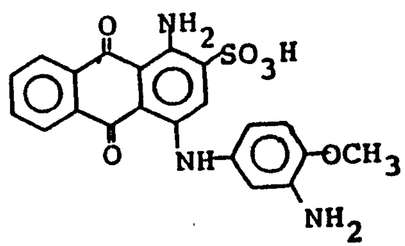 | 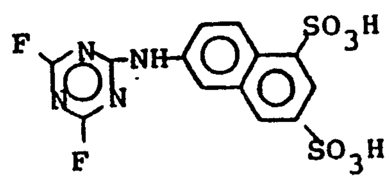 | " | 40 | " |
| 54 | " | 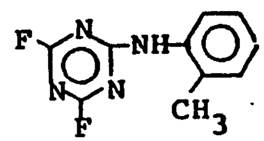 | " | 40 | " |
| 55 | " | 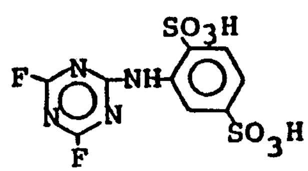 | " | 40 | " |

| Bei-spiel | Anthrachinonderivat | Reaktivkomponente | Farbton | C.I. Nr. | |
|---|---|---|---|---|---|
| 56 | 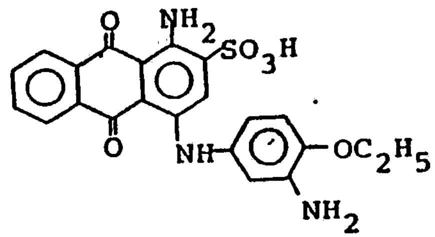 | 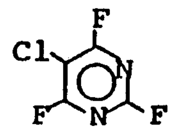 | blaust.Grün | 40 | Dull |
| 57 | " | $Br-CH_2-CHBr-COCl$ | " | 39 | " |
| 58 | " | 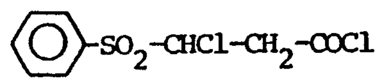 | " | " | " |
| 59 | " | 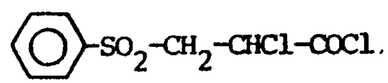 | " | " | " |
| 60 | " | 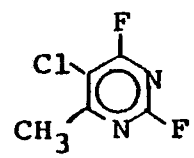 | " | 40 | " |
| 61 | 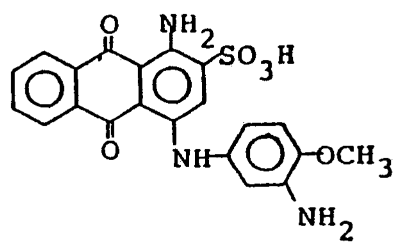 | 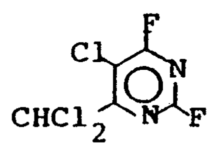 | " | 40 | " |
| 62 | " | 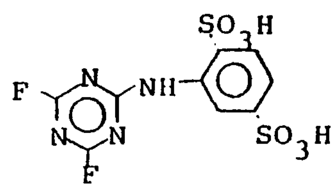 | " | " | " |

| Beispiel | Anthrachinonderivat | Reaktivkomponente | Farbton | CI. Nr. | |
|---|---|---|---|---|---|
| 63 | 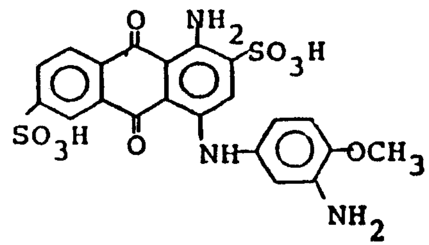 | 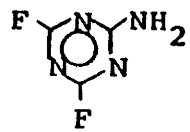 | blaust.Grün | 16 | bright |
| 64 | " | $BrCH_2-CHBr-COCl$ | " | 16 | " |
| 65 | " | 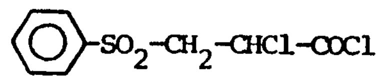 | " | " | " |
| 66 | " | 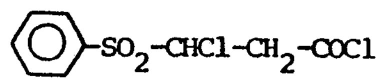 | " | " | " |
| 67 | " | 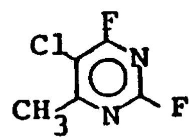 | " | " | " |
| 68 | " | 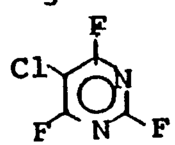 | " | " | " |
| 69 | 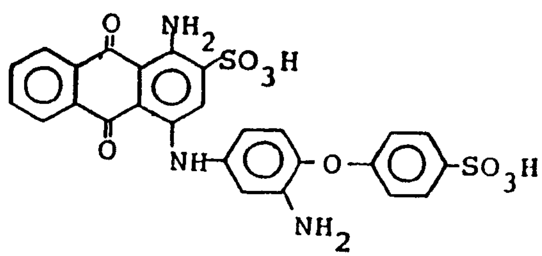 | 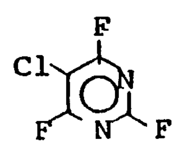 | Blau | 28 | |

| Beispiel | Anthrachinonderivat | Reaktivkomponente | Farbton | CI. Nr. |
|---|---|---|---|---|
| 70 | " | $Br-CH_2-CHBr-COCl$ | Blau | 28 |
| 71 | " | 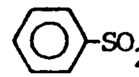 $-SO_2-CHCl-CH_2-COCl$ | " | " |
| 72 | " | 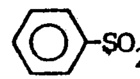 $-SO_2-CH_2-CHCl-COCl$ | " | " |
| 73 | " | 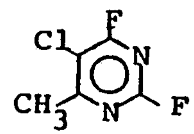 | " | " |
| 74 | " | 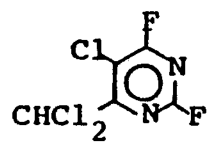 | " | " |
| 75 | " | 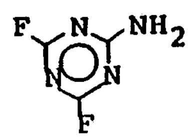 | " | " |
| 76 | " | $ClCH_2-COCl$ | " | " |

| Beispiel | Anthrachinonderivat | Reaktivkomponente | Farbton | CI. Nr. |
|---|---|---|---|---|
| 77 | 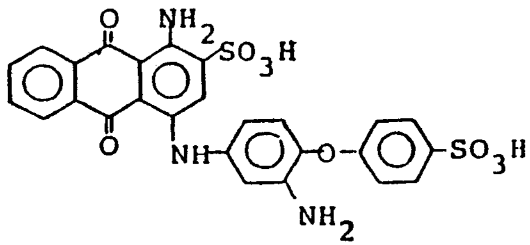 | 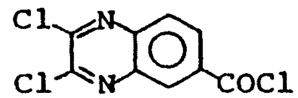 | Blau | 28 |
| 78 | " | 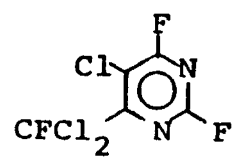 | " | " |
| 79 | " | 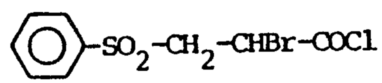 | " | " |
| 80 | " | $CH_2=CBr-COCl$ | " | " |

**Beispiel 81**

100 g des Farbstoffs aus Beispiel 35 werden innerhalb einer Stunde bei 10-15°C in eine Mischung aus 50 ml konz. Schwefelsäure und 200 ml Oleum (20%ig an $SO_3$) eingetragen. Danach erwärmt man langsam auf 40 C und hält diese Temperatur über 2,5 Stunden. Es wird ca. 6 Stunden nachgerührt und nach dem Erkalten auf 1,5 kg Eis und 500 ml Wasser ausgetragen. Der ausgefallene Farbstoff wird kalt isoliert, bei 0-5°C in Wasser suspendiert und mit Sodalösung neutralisiert, ausgesalzen, abgesaugt und getrocknet. Man erhält 140 g Farbstoff, der mit dem in Beispiel 1 beschriebenen identisch ist.

Auf ähnliche Weise lassen sich auch die in den Beispielen 36-80 genannten Farbstoffe in die eine Sulfonsäuregruppe mehr enthaltenden Farbstoffe überführen.

**Patentansprüche**

1) Anthrachinon-Reaktivfarbstoffe der allgemeinen Formel

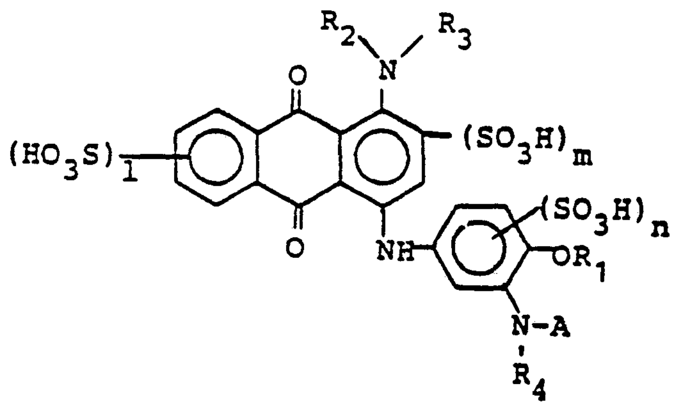

(I)

worin
$R_1$ = Alkyl, Cycloalkyl, Aryl oder Aralkyl,
$R_2$ bis $R_4$ Wasserstoff oder $R_1$,
l, m und n gleich oder verschieden sind und für 0 oder 1 stehen, wobei $1 + m + n \geqslant 1$ und
A = faserreaktiver Rest.

2) Reaktivfarbstoffe nach Anspruch 1, wobei
A = faserreaktiver Rest einer aliphatischen, aromatischen oder heteroaromatischen Carbonsäure oder eines fluorhaltigen Heterocyclus,
$R_1$ = $C_1$-$C_4$-Alkyl, gegebenenfalls durch $SO_3H$, Halogen oder COOH substituiertes Phenyl oder Benzyl,
$R_2$ bis $R_4$ = Wasserstoff oder $C_1$-$C_4$-Alkyl,
l = 0,1,
m = 1,
n = 0,1.

3) Reaktivfarbstoffe nach den Ansprüchen 1 bis 2, dadurch gekennzeichnet, daß
A für einen Halogenpropionylrest, einen Fluorpyrimidinylrest, einen Fluortriazinylrest, für den Dichlorchinoxalincarbonsäurechlorid-Rest oder einen Acrylsäurerest steht.

4) Farbstoffe der Formel

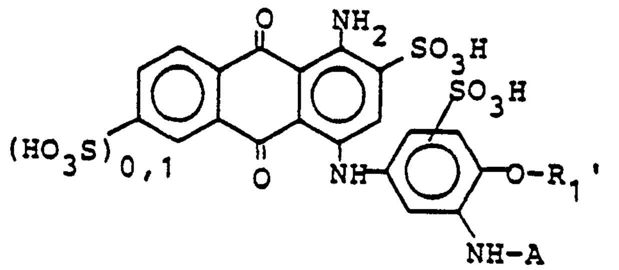

(Ia)

worin
$R'_1$ = $C_1$-$C_4$-Alkyl oder gegebenenfalls durch $SO_3H$ substituiertes Phenyl und
A die in Anspruch 3 angegebene Bedeutung besitzt.

5) Verfahren zur Herstellung von Anthrachinon-Reaktivfarbstoffen der allgemeinen Formel

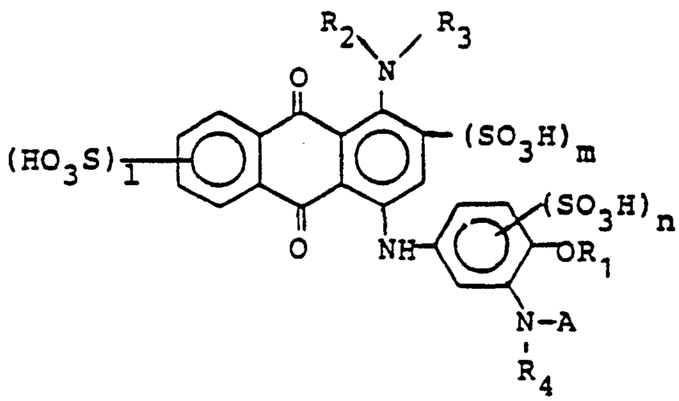

(I)

worin
$R_1$ = Alkyl, Cycloalkyl, Aryl oder Aralkyl,
$R_2$ bis $R_4$ = Wasserstoff oder $R_1$,
l, m und n gleich oder verschieden sind und für 0 oder 1 stehen und
A = faserreaktiver Rest,
dadurch gekennzeichnet, daß man Verbindungen der Formel

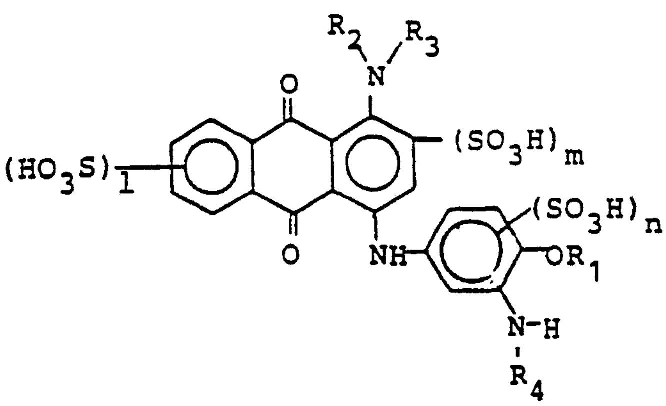

(VII)

worin
$R_1$, $R_2$, $R_3$ und $R_4$ sowie l, m und n die oben angegebene Bedeutung besitzen,
mit Verbindungen der Formel

A-Y (V)
worin
Y = abspaltbarer Rest und
A die vorstehend angegebene Bedeutung hat,
umsetzt.

6) Verwendung der Farbstoffe der Ansprüche 1 bis 4 zum Färben und Bedrucken hydroxylgruppenhaltiger und stickstoffhaltiger Fasermaterialien.

7) Mit den Farbstoffen der Ansprüche 1 bis 4 gefärbte oder bedruckte Fasermaterialien.

**Claims**

1) Anthraquinone reactivt dyestuffs of the general formula

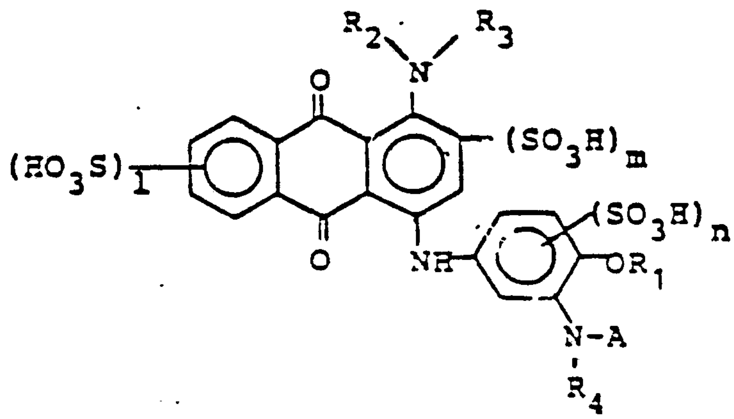

(I)

wherein
$R_1$ = alkyl, cycloalkyl, aryl or aralkyl,
$R_2$ to $R_4$ = hydrogen or $R_1$,
l, m and n are identical or different and represent 0 or 1 with $1 + m + n \geqslant 1$, and
A = a fibre-reactive radical.

2) Reactive dyestuffs according to Claim 1,
wherein
A = a fibre-reactive radical of an aliphatic, aromatic or heteroaromatic carboxylic acid or of a fluorine-containing heterocycle,
$R_1$ = $C_1$-$C_4$-alkyl, optionally $SO_3H$-, halogen- or COOH-substituted phenyl or benzyl,
$R_2$ to $R_4$ = hydrogen or $C_1$-$C_4$-alkyl,
l = 0 or 1,
m = 1 and
n = 0 or 1.

3) Reactive dyestuffs according to Claims 1 to 2, characterised in that
A represents a halogenopropionyl radical, a fluoropyrimidinyl radical, a fluorotriazinyl radical, the dichloroquinoxalinecarbonyl chloride radical or an acrylic acid radical.

4) Dyestuffs of the formula

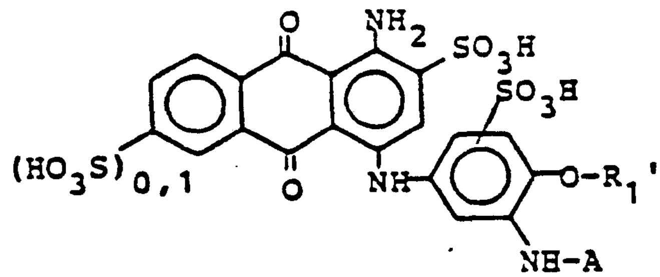

(Ia)

wherein
$R_1'$ = Ci-$C_4$-alkyl or optionally $SO_3H$-substituted phenyl and
A has the meaning indicated in Claim 3.

5) Process for preparing anthraquinone reactive dyestuffs of the general formula

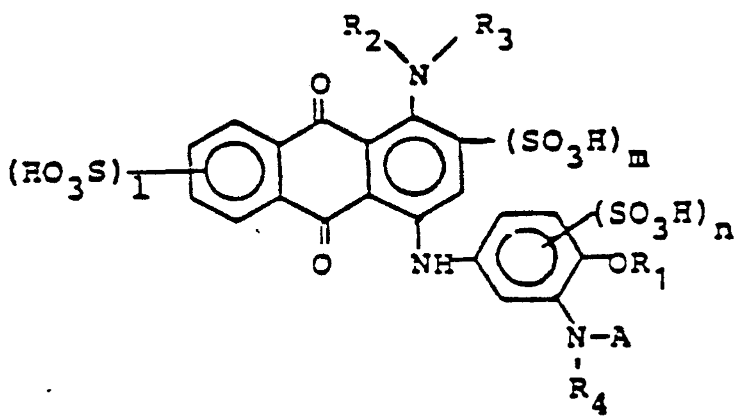

(I)

wherein
$R_1$ = alkyl, cycloalkyl, aryl or aralkyl,
$R_2$ to $R_4$ = hydrogen or $R_1$,
l, m and n are identical or different and represent 0 or 1, and
A = a fibre-reactive radical,
characterised in that compounds of the formula

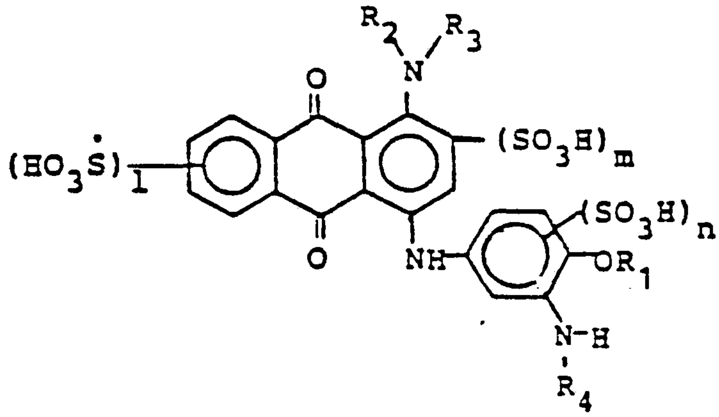

(VII)

wherein
$R_1$, $R_2$, $R_3$ and $R_4$ and l, m and n have the abovementioned meaning,
are reacted with compounds of the formula
A-Y (V)
wherein
Y = a detachable radical and
A has the abovementioned meaning.

6) Use of the dyestuffs of Claims 1 to 4, for dyeing and printing fibre materials containing hydroxyl groups and nitrogen.

7) Fibre materials dyed or printed with the dyestuffs of Claims 1 to 4.

**Revendications**

1. Colorants réactifs anthraquinoniques de formule générale

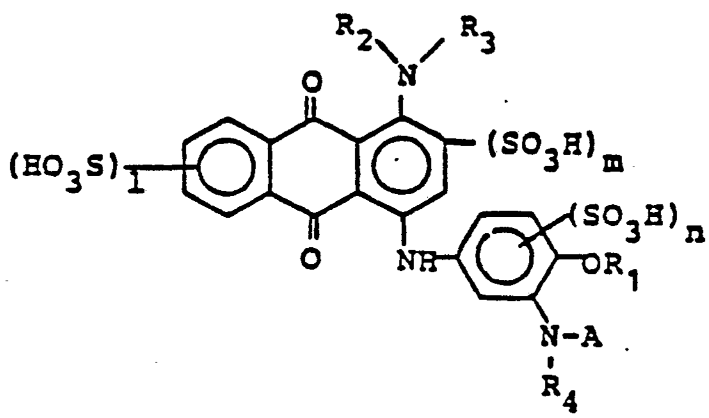

(I)

dans laquelle
$R_1$ est un groupe alkyle, cycloalkyle, aryle ou aralkyle,
$R_2$ à $R_4$ représente l'hydrogène ou $R_1$,
l, m et n sont égaux ou différents et ont la valeur 0 ou 1, la somme $l + m + n$ étant $\geqslant 1$
A est un reste réactif envers la fibre.

2. Colorants réactifs suivant la revendication 1, dans lesquels
A est un reste réactif envers la fibre d'un acide carboxylique aliphatique, aromatique ou hétéroaromatique ou d'un hétérocycle contenant du fluor,
$R_1$ est un groupe en $C_1$ à $C_4$, un groupe phényle portant eventuellement un substituant $SO_3H$, halogène ou COOH, ou un groupe benzyle,
$R_2$ et $R_4$ représentent l'hydrogène ou un groupe alkyle en $C_1$ à $C_4$,
l a la valeur 0 ou 1
m est égal à 1

n a la valeur 0 ou 1

3. Colorants réactifs suivant les revendications 1 et 2, caractérisés en ce que

A représente un reste halogénopropionyle, un reste fluoropyrimidinyle, un reste fluorotriazinyle, le reste chlorure d'acide dichloroquinoxaline-carboxylique ou un reste acide acrylique.

4. Colorants de formule

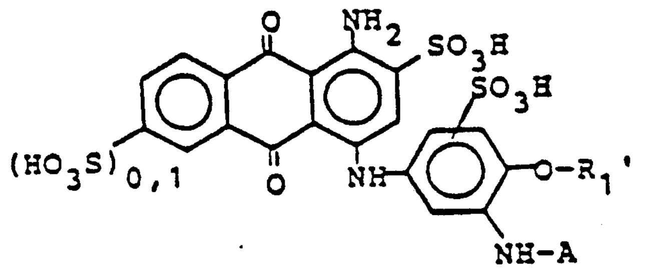

(Ia)

dans laquelle

R'$_1$ est un reste alkyle en $C_1$ à $C_4$ ou un reste phényle portant éventuellement un substituant $SO_3H$ et

A a la définition indiquée dans la revendication 3.

5. Procédé de production de colorants réactifs anthraquinonique; de formule générale

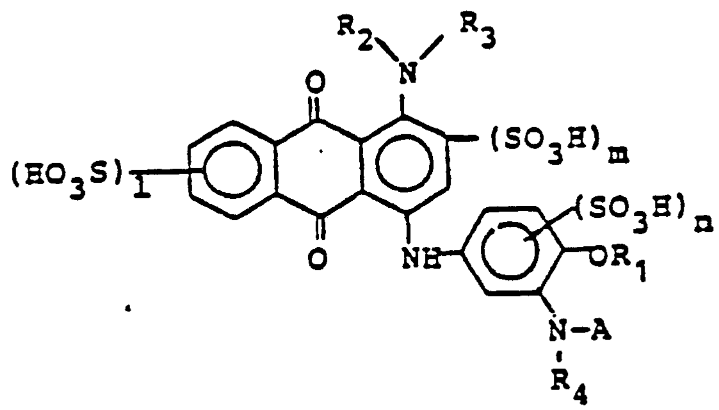

(I)

dans laquelle

$R_1$ est un groupe alkyle, cycloalkyle, aryle ou aralkyle,

$R_2$ à $R_4$ représentent l'hydrogène ou $R_1$,

l, m et n sont égaux ou différents et ont la valeur 0 ou 1 et

A est un reste réactif envers la fibre,

caractérisé en ce qu'on fait réagir des composés de formule

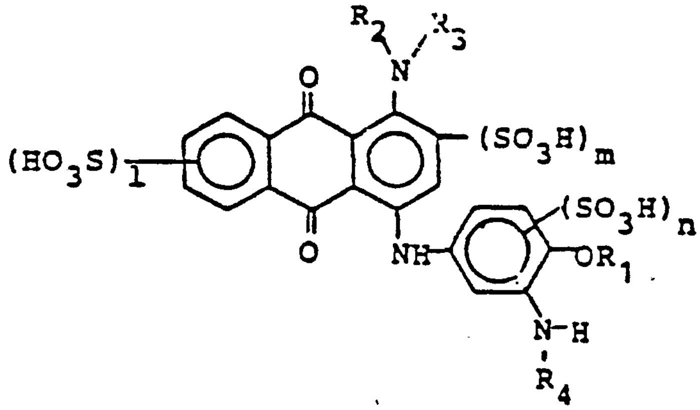

(VII)

dans laquelle
$R_1$, $R_2$, $R_3$ et $R_4$ ainsi que l, m et n ont la définition indiquée ci-dessus,
avec des composés de formule
A-Y (V)
dans laquelle
Y est un reste éliminable et
A a la définition indiquée ci-dessus.

6. Utilisation des colorants suivant les revendications 1 à 4 pour la teinture et l'impression de matières fibreuses portant des groupes hydroxyle et contenant de l'azote.

7. Matières fibreuses teintes ou imprimées avec les colorants des revendications 1 à 4.